# EUROPEAN PATENT SPECIFICATION

(11) **EP 3 063 552 B1**
(45) Date of publication and mention of the grant of the patent: **31.07.2019**
(21) Application number: 14786474.8
(22) Date of filing: 13.10.2014
(51) Int. Cl.: G01S 17/89, G01C 15/00, G01C 21/36, G06K 9/00, G01B 11/02, G01S 7/48, G06T 7/60, G06T 7/73

(54) **METHOD AND APPARATUS FOR ROAD WIDTH ESTIMATION**
VERFAHREN AND VORRICHTUNG ZUR BESTIMMUNG EINER STRASSENBREITE
METHOD ET SYSTEME POUR L'ESTIMATION D'UNE LARGEUR DE ROUTE

(30) Priority: 31.10.2013 US 201314068710
(43) Date of publication of application: 07.09.2016
(73) Proprietor: HERE Global B.V., 5611 ZT Eindhoven (NL)
(72) Inventor: MA, Xiang, Chicago, IL 60616 (US); CHEN, Xin, Evanston, IL 60203 (US)
(74) Representative: Cohausz & Florack
(86) International application number: PCT/EP2014/071828
(87) International publication number: WO 2015/062850

(56) References cited:
- EP-A1- 2 228 782
- US-A1- 2010 017 060
- US-A1- 2011 227 781
- US-A1- 2013 253 753

## Description

### TECHNOLOGICAL FIELD

Example embodiments of the present invention relate generally to three dimensional modeling and, more particularly, to a method and apparatus for estimating road geometry.

### BACKGROUND

Road geometry modeling is very useful for three dimensional (3D) map creation and 3D terrain identification. Traditional methods for 3D modeling of road geometry are resource intensive, often requiring significant amounts of human measurement and calculation. Such methods are thus time consuming and costly. Exacerbating this issue is the fact that many modern day applications (e.g., 3D mapping, terrain identification, or the like) require the analysis of large amounts of data, and therefore are not practical without quicker or less costly techniques.

Some current methods rely upon 3D light detection and ranging (lidar) data to perform road terrain detection, but these methods have deficiencies. For instance, some systems designed for terrain detection around a vehicle exist, but are unable to handle cases where the road does not include a curb. Other techniques appear to use elevation-based road segments, but are also only able to detect road edges where there is a curb. Moreover, these techniques are unable to handle roads on which there is missing lidar data (occlusions) regarding the road surface. Finally, these methods may be unable to calculate or estimate road width, at least with a desired accuracy. US 2010/017060 A1 discloses a method for detecting road edges from a lidar scan. A flat region is identified which represents the road and side regions are identified as candidate regions for containing road edges. Determination of road edges is further refined by projecting data points onto the ground plane.

EP 2228782 A1 discloses devices and methods for determining geographic features corresponding to a road network. Data points are collected via a LIDAR device while driving on a road of the road network; the collected data points are filtered based on a retroreflectivity threshold and data points are identified that correspond to a road feature based on the filtered data points, wherein the road feature is treated with a retroreflective substance.

### BRIEF SUMMARY

Accordingly, a method, apparatus, and computer program product are provided for automatic road geometry modeling using lidar data captured by specifically-designed vehicles. In an example embodiment, a method, apparatus and computer program product are provided that estimate road widths, irrespective of the presence of curbs or occlusions on the road surface.

According to the present invention, a method is provided that comprises: accessing a point cloud representing terrain, the point cloud generated from a lidar scanning device traveling during a trip; dividing the point cloud into sections representing portions of the terrain; and calculating, by a processor, a road width of each of the sections, wherein calculating the road width of each section includes: segmenting points in the section and identifying as a ground planar surface of the section a planar surface of the segmented points in the section which meets predefined criteria; estimating a drive plane of the section based on the ground planar surface and a drive direction of the section in which the lidar scanning device was travelling during the trip, wherein the drive plane is parallel to the drive direction and orthogonal to the ground planar surface; and calculating a road width of the section based on the ground planar surface and the drive plane.

In one embodiment, identifying the ground planar surface of the section may include segmenting ground points in the section based on sensor locations and possible road ranges, and identifying a biggest planar surface of the segmented ground points as the ground planar surface. In another such embodiment, estimating the drive plane of the section includes identifying the drive direction of the section based on sensor locations in timestamps corresponding to the section, and estimating the drive plane of the section as a plane that intersects the sensor locations, that is parallel to the drive direction, and that is orthogonal to the ground planar surface of the section. In yet another such embodiment, calculating the road width of the section includes creating a first distance-to-height (D-H) map based on a portion of the ground planar surface to the left of the drive plane, creating a second D-H map based on a portion of the ground planar surface to the right of the drive plane, and detecting, using bin analysis, whether road structures are present in the D-H maps. In this embodiment, calculating the road width of the section further includes classifying any detected road structures, calculating a left boundary point using the first D-H map and a right boundary point using the second D-H map, and identifying the road width of the section as a distance from the left boundary point to the right boundary point. In this regard, calculating a boundary point using a D-H map may include: in an instance in which a road structure detected using the D-H map comprises a curb, identifying the curb as the boundary point; in an instance in which a height drop between bins of the D-H map exceeds a threshold, identifying a point at which the height drop occurs as the boundary point; and in an instance in which no road structures or height drops are detected, identifying, as the boundary point, a point on the D-H map that is farthest from the drive plane.

In another example embodiment, an apparatus is provided having at least one processor and at least one memory including computer program code, the at least one memory and the computer program code configured to, with the at least one processor, cause the apparatus to access a point cloud representing terrain. In one such embodiment, the point cloud may be generated from lidar scanning during a trip. The at least one memory and the computer program code are further configured to divide the point cloud into sections representing portions of the terrain, and calculate a road width of each of the sections. The at least one memory and the computer program code are further configured to, with the at least one processor, cause the apparatus to apply a smoothing algorithm to adjust the calculated road width of at least one section.

In some embodiments of the apparatus, the at least one memory and the computer program code are configured to, with the at least one processor, cause the apparatus to calculate a road width of a section by identifying a ground planar surface of the section, estimating a drive plane of the section based on the ground planar surface and a drive direction, and calculating a road width of the section based on the ground planar surface and the drive plane.

In one such embodiment, the at least one memory and the computer program code are configured to, with the at least one processor, cause the apparatus to identify the ground planar surface of the section by segmenting ground points in the section based on sensor locations and possible road ranges, and identifying a biggest planar surface of the segmented ground points as the ground planar surface.

In another such embodiment, the at least one memory and the computer program code are configured to, with the at least one processor, cause the apparatus to estimate the drive plane of the section by identifying the drive direction of the section based on sensor locations in timestamps corresponding to the section, and estimating the drive plane of the section as a plane that intersects the sensor locations, that is parallel to the drive direction, and that is orthogonal to the ground planar surface of the section.

In yet another such embodiment, the at least one memory and the computer program code are configured to, with the at least one processor, cause the apparatus to calculate the road width of the section by creating a first D-H map based on a portion of the ground planar surface to the left of the drive plane, creating a second D-H map based on a portion of the ground planar surface to the right of the drive plane, detecting, using bin analysis, whether road structures are present in the D-H maps, classifying any detected road structures, calculating a left boundary point using the first D-H map and a right boundary point using the second D-H map, and identifying the road width of the section as a distance from the left boundary point to the right boundary point. In this regard, calculating a boundary point using a D-H map may include: in an instance in which a road structure detected using the D-H map comprises a curb, identifying the curb as the boundary point; in an instance in which a height drop between bins of the D-H map exceeds a threshold, identifying a point at which the height drop occurs as the boundary point; and in an instance in which no road structures or height drops are detected, identifying, as the boundary point, a point on the D-H map that is farthest from the drive plane.

In another example embodiment, a computer program product is provided, having at least one computer-readable storage medium having computer-executable program code portions stored therein, the computer-executable program code portions comprising program code instructions that, when executed, cause an apparatus to access a point cloud representing terrain. In one such embodiment, the point cloud may be generated from lidar scanning during a trip. The program code instructions, when executed, further cause the apparatus to divide the point cloud into sections representing portions ofthe terrain, and calculate a road width of each of the sections. The program code instructions, when executed, may further cause the apparatus to apply a smoothing algorithm to adjust the calculated road width of at least one section.

In one embodiment of the computer program product, the program code instructions, when executed, cause the apparatus to calculate a road width of a section by identifying a ground planar surface of the section, estimating a drive plane of the section based on the ground planar surface and a drive direction, and calculating a road width of the section based on the ground planar surface and the drive plane.

In one such embodiment, the program code instructions, when executed, cause the apparatus to identify the ground planar surface of the section cloud by segmenting ground points in the section based on sensor locations and possible road ranges, and identifying a biggest planar surface of the segmented ground points as the ground planar surface.

In another such embodiment, the program code instructions, when executed, cause the apparatus to estimate the drive plane of the section by identifying the drive direction of the section based on sensor locations in timestamps corresponding to the section, and estimating the drive plane of the section as a plane that intersects the sensor locations, that is parallel to the drive direction, and that is orthogonal to the ground planar surface ofthe section.

In yet another such embodiment, the program code instructions, when executed, cause the apparatus to calculate the road width of the section by creating a first D-H map based on a portion of the ground planar surface to the left of the drive plane, creating a second D-H map based on a portion of the ground planar surface to the right of the drive plane, detecting, using bin analysis, whether road structures are present in the D-H maps, classifying any detected road structures, calculating a left boundary point using the first D-H map and a right boundary point using the second D-H map, and identifying the road width of the section as a distance from the left boundary point to the right boundary point. In this regard, calculating a boundary point using a D-H map may include: in an instance in which a road structure detected using the D-H map comprises a curb, identifying the curb as the boundary point; in an instance in which a height drop between bins of the D-H map exceeds a threshold, identifying a point at which the height drop occurs as the boundary point; and in an instance in which no road structures or height drops are detected, identifying, as the boundary point, a point on the D-H map that is farthest from the drive plane.

In another example embodiment, an apparatus is provided that includes means for accessing a point cloud representing terrain, the point cloud generated from lidar scanning during a trip. The apparatus further includes means for dividing the point cloud into sections representing portions of the terrain, and means for calculating a road width of each of the sections. The apparatus may further include means for applying a smoothing algorithm to adjust the calculated road width of at least one section.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will now be made to the accompanying drawings, which are not necessarily drawn to scale, and wherein:
Figure 1 shows a block diagram of an apparatus that may be specifically configured in accordance with an example embodiment of the present invention;
Figure 2 illustrates a flowchart describing example operations for estimating road widths, in accordance with some example embodiments;
Figure 3 illustrates a flowchart describing example operations for calculating a road width of a section, in accordance with some example embodiments;
Figure 4 illustrates a flowchart describing example operations for identifying a ground planar surface of a section, in accordance with some example embodiments;
Figure 5A illustrates an example of a rough segmentation of ground points, in accordance with some example embodiments;
Figure 5B illustrates an example of a separation of a round planar section into left and right portions, in accordance with some example embodiments;
Figures 6A, 6B, and 6C illustrate features of distance-height maps used in accordance with some example embodiments;
Figure 7 illustrates a flowchart describing example operations for estimating a drive plane of the section, in accordance with some example embodiments;
Figure 8 illustrates a flowchart describing example operations for calculating the road width of the section, in accordance with some example embodiments;
Figure 9 illustrates a flowchart describing example operations for calculating a boundary point using a D-H map, in accordance with some example embodiments;
Figures 10A and 10B illustrate an example of road boundary and width calculations on a good road surface, in accordance with some example embodiments;
Figures 11A and 11B illustrate an example of road boundary and width calculations when a vehicle is on the road surface, in accordance with some example embodiments;
Figures 12A and 12B illustrate an example of road boundary and width calculations on a road with no left curb or median, in accordance with some example embodiments; and
Figures 13A and 13B illustrate an example of road boundary and width calculations on a road with a height drop to the left, in accordance with some example embodiments.

### DETAILED DESCRIPTION

Some embodiments of the present invention will now be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout. As used herein, the terms "data," "content," "information," and similar terms may be used interchangeably to refer to data capable of being transmitted, received, and/or stored in accordance with embodiments of the present invention. Thus, use of any such terms should not be taken to limit the spirit and scope of embodiments of the present invention.

Additionally, as used herein, the term "circuitry" refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of "circuitry" applies to all uses of this term herein, including in any claims. As a further example, as used herein, the term "circuitry" also includes an implementation comprising one or more processors and/or portion(s) thereof and accompanying software and/or firmware. As another example, the term "circuitry" as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

A method, apparatus, and computer program product are provided in accordance with an example embodiment of the present invention in order to estimate road widths, irrespective of the presence of curbs or occlusions on the road surface. As such, the method, apparatus, and computer program product may be embodied by one or more of a variety of computing devices. For example, these computing devices may include any of a variety of mobile terminals, such as a portable digital assistant (PDA), mobile telephone, smartphone, mobile television, gaming device, laptop computer, camera, tablet computer, video recorder, web camera, or any combination of the aforementioned devices. Additionally or alternatively, the present invention may be embodied by fixed computing devices, such as a personal computer or a computer workstation. Still further, the method, apparatus, and computer program product of an example embodiment may include a networked device, such as a server or other network entity, configured to communicate with one or more devices, such as one or more client devices.

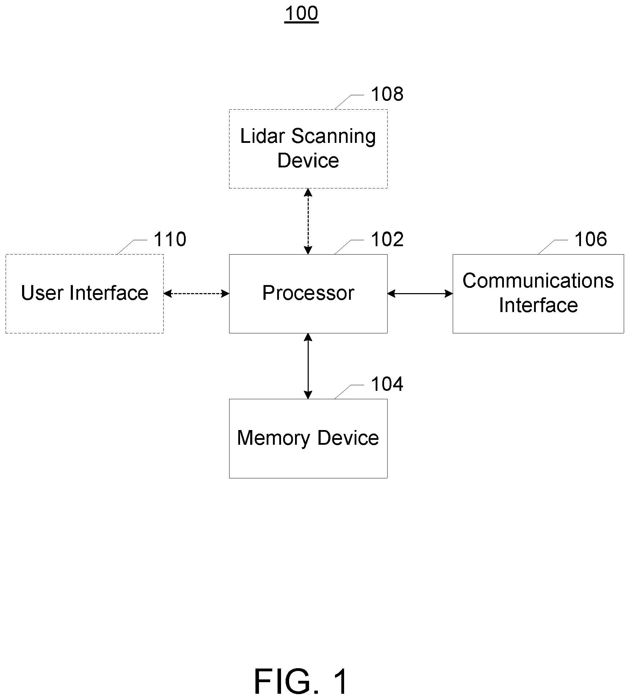

Regardless of the type of computing device, an apparatus 100 that is embodied by or associated with the computing device is illustrated in Figure 1 that may be specifically configured to estimate road widths, irrespective of the presence of curbs or occlusions on the road surface, in accordance with an example embodiment of the present invention. It should be noted that while Figure 1 illustrates one example configuration, numerous other configurations may also be used to implement embodiments of the present invention. As such, in some embodiments, although elements are shown as being in communication with each other, hereinafter such elements should be considered to be capable of being embodied within the same device or within separate devices.

Referring now to Figure 1, the apparatus 100 may include or otherwise be in communication with a processor 102, a memory device 104, a communication interface 106, and optionally a lidar scanning device 108 and a user interface 110. In some embodiments, the processor 102 (and/or co-processor or any other processing circuitry assisting or otherwise associated with the processor) may be in communication with the memory device 104 via a bus for passing information among components of the apparatus. The memory device 104 may be non-transitory and may include, for example, one or more volatile and/or non-volatile memories. In other words, for example, the memory device 104 may be an electronic storage device (e.g., a computer readable storage medium) comprising gates configured to store data (e.g., bits) that may be retrievable by a machine (e.g., a computing device like the processor). The memory device 104 may be configured to store information, data, content, applications, instructions, or the like, for enabling the apparatus to carry out various functions in accordance with an example embodiment of the present invention. For example, the memory device 104 could be configured to buffer input data for processing by the processor 102 or to store lidar data or a point cloud generated from the lidar data, using which the apparatus 100 may estimate road widths. Additionally or alternatively, the memory device 104 could be configured to store instructions for execution by the processor 102.

The apparatus 100 may be embodied by a computing device, such as a computer terminal. However, in some embodiments, the apparatus 100 may be embodied as a chip or chip set. In other words, the apparatus 100 may comprise one or more physical packages (e.g., chips) including materials, components, and/or wires on a structural assembly (e.g., a baseboard). The structural assembly may provide physical strength, conservation of size, and/or limitation of electrical interaction for component circuitry included thereon. Similarly, the computing device embodying the apparatus may be located on or within a vehicle, such as an automobile, an airplane, or the like. However, it is not necessary for all of the components of apparatus 100 to be co-located on a vehicle. In this regard, various portions of apparatus 100 may be embodied on a vehicle (e.g., lidar scanning device 108), while other portions may be located elsewhere, such as in a fixed location.

The processor 102 may be embodied in a number of different ways. For example, the processor may be embodied as one or more of various hardware processing means such as a co-processor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining, and/or multithreading.

In an example embodiment, the processor 102 may be configured to execute instructions stored in the memory device 104 or otherwise accessible to the processor. Alternatively or additionally, the processor 102 may be configured to execute hard-coded functionality. As such, whether configured by hardware or software methods, or by a combination thereof, the processor 102 may represent an entity (e.g., physically embodied in circuitry) capable of performing operations according to an embodiment of the present invention while configured accordingly. Thus, for example, when the processor 102 is embodied as an ASIC, FPGA, or the like, the processor 102 may be specifically configured hardware for conducting the operations described herein. Alternatively, as another example, when the processor 102 is embodied as an executor of software instructions, the instructions may specifically configure the processor 102 to perform the algorithms and/or operations described herein when the instructions are executed. However, in some cases, the processor 102 maybe a processor of a specific device (e.g., a pass-through display or a mobile terminal) configured to employ an embodiment of the present invention by further configuration of the processor by instructions for performing the algorithms and/or operations described herein. The processor 102 may include, among other things, a clock, an arithmetic logic unit (ALU), and logic gates configured to support operation of the processor 102.

Meanwhile, the communication interface 106 may be any means such as a device or circuitry embodied in either hardware or a combination of hardware and software that is configured to receive and/or transmit data from/to a network and/or any other device or module in communication with the apparatus 100. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may additionally or alternatively support wired communication. As such, for example, the communication interface may include a communication modem and/or other hardware/software for supporting communication via cable, digital subscriber line (DSL), universal serial bus (USB), or other mechanisms.

In some embodiments, the apparatus 100 may also include a lidar scanning device 108, which includes a laser emitter for transmitting laser pulses, and a sensor configured to detect the laser pulses as they return to the lidar scanning device 108. In this regard, the lidar scanning device 108 is able to determine the distance travelled by each laser pulse based on the time between emission and sensing of the laser pulse. Similarly, the lidar scanning device 108 is able to determine its absolute location at the time each laser pulse is emitted and at the time the laser pulses are sensed. In this regard, lidar scanning device 108 may include one or more geo-referencing systems, such as the Global Positioning System (GPS), precision gyroscopes, or the like. Accordingly, by emitting a large number of laser pulses while the lidar scanning device 108 moves, the lidar scanning device 108 is able to capture lidar data including time stamps of when particular laser pulses were emitted, sensed, and the absolute location of the lidar scanning device 108 at the time that the laser pulses were emitted and sensed. The lidar data may include a point cloud representing calculated locations of objects from which the laser pulses were reflected. The lidar point cloud data thus enables subsequent terrain analysis by apparatus 100 to estimate road widths of sections of a road. Accordingly, the lidar scanning device 108 may include all hardware (for example, the laser emitter or other optical component(s), sensor, laser signal processor, all necessary on-board memory, and/or the like) and software necessary for capturing lidar data. Alternatively, the lidar scanning device 108 may include only the hardware needed to emit and detect laser pulses, while the processor 102 directs collection of the lidar data based on instructions stored, for example, in memory device 104. Moreover, the memory device 104 may provide all necessary data storage, such as by storing the lidar data captured by the lidar scanning device 108.

While apparatus 100 may include lidar scanning device 108 in some embodiments, in other embodiments apparatus 100 does not include lidar scanning device 108 and instead is configured to receive lidar data from another apparatus via communications device 106 or from a user via user interface 110. Accordingly, while some embodiments of the invention enable the capture and analysis of lidar data within apparatus 100, other embodiments may separate the operations involved in acquiring lidar data from the operations involved in analyzing the lidar data to estimate vehicle road widths.

In some embodiments, the apparatus 100 may include a user interface 110 that may, in turn, be in communication with processor 102 to provide output to the user and, in some embodiments, to receive an indication of a user input. As such, the user interface may include a display and, in some embodiments, may also include a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone, and/or the like. The processor and/or user interface circuitry comprising the processor may be configured to control one or more functions of one or more user interface elements through computer program instructions (e.g., software and/or firmware) stored on a memory accessible to the processor (e.g., memory device 104, and/or the like).

Using apparatus 100, embodiments of the present invention provide a fully automatic method for 3D road width estimation based on 3D lidar data. Such embodiments are configured to detect road structures, such as curbs, raised medians, vehicles (moving or parked), and classify them based on extracted features and rules. Moreover, embodiments are configured to handle cases where there are occlusions, or where there is no curb on a side of road (for example, a road having a boundary sloping down a hill, or a flat road without any curbs). Embodiments are configured to distinguish road curbs/raised medians from parked vehicles and other objects. Accordingly, embodiments of the present invention provide a comprehensive road width estimation algorithm based on vehicle lidar sensor locations, vehicle driving orientation, as well as the recognition and classification of road structures. Finally, because the estimation is based on lidar data, the road width estimation results are not affected by weather conditions or lighting/shadows.

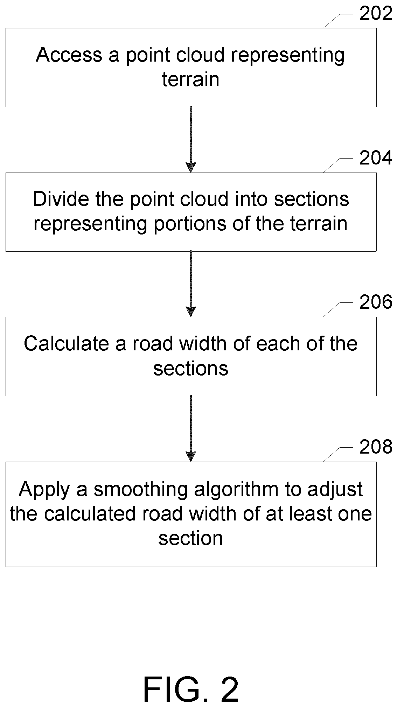

Figure 2 illustrates a flowchart containing a series of operations performed to estimate road widths, in accordance with embodiments of the present invention. The operations illustrated in Figure 2 may, for example, be performed by, with the assistance of, and/or under the control of apparatus 100, and in particular by, with, or under the control of one or more of processor 102, memory device 104, communications interface 106, lidar scanning device 108, and user interface 110.

In operation 202, apparatus 100 includes means, such as processor 102, memory device 104, the communications interface 106, user interface 110, or the like, for accessing a point cloud representing terrain, the point cloud generated from lidar scanning during a trip. As described previously, the point cloud may be generated and stored by the lidar scanning device 108 of apparatus 100, it may be stored in memory device 104, or the point cloud may be generated by a different device and received by apparatus 100 via communications interface 106 or user interface 110.

In operation 204, apparatus 100 includes means, such as processor 102, lidar scanning device 108, or the like, for dividing the point cloud into sections representing portions of the terrain. In some embodiments, the point cloud is divided into a predefined number of sections, with each section corresponding to an equally sized chunk of the terrain, although equally sizing the sections is not necessary.

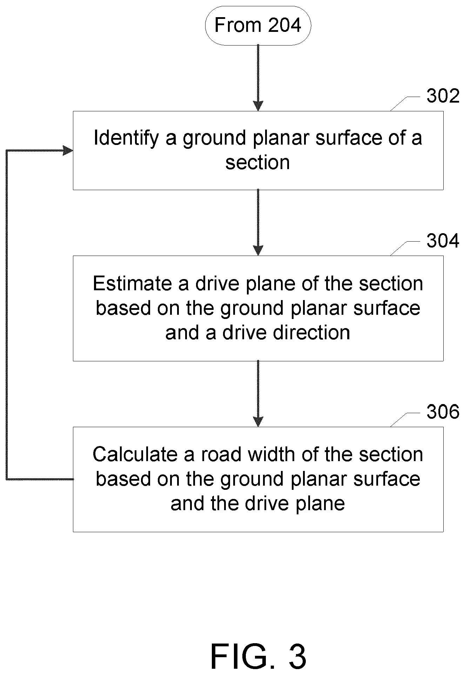

In operation 206, apparatus 100 includes means, such as processor 102 or the like, for calculating a road width of each of the sections. In this regard, calculating a road width of a section is described in greater detail in conjunction with Figure 3.

Finally, in operation 208, apparatus 100 may optionally include means, such as processor 102 or the like, for applying a smoothing algorithm to adjust the road width of at least one section. In some embodiments, the smoothing algorithm is based on an arbitrary number N of neighbors, in which case the road width is adjusted to be either the mean value or median value of road widths of the N sections of the point cloud centered on the section being evaluated. In some embodiments, the smoothing algorithm maybe applied only in situations where there are occlusions in the section of the point cloud being evaluated. Additionally or alternatively, the smoothing algorithm may be applied if the calculated road width of the section being evaluated differs from its neighbors by more than a predetermined amount or percentage. Accordingly, by preventing sudden changes of road width between sections, the smoothing algorithm is likely to reduce the impact of "noise" in the point cloud data, and concomitantly to increase the accuracy of the overall road width estimation.

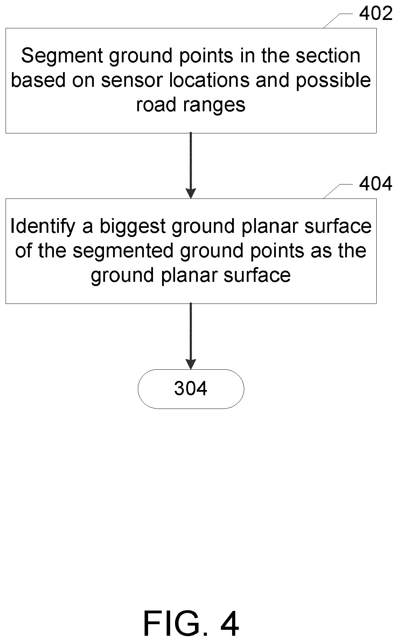

Turning now to Figure 3, a flowchart is shown that describes example embodiments for calculating a road width of a section. In operation 302, the apparatus 100 may further include means, such as the processor 104 or the like, for identifying a ground planar surface of the section. In this regard, identifying a ground planar surface of the section is described in greater detail in conjunction with Figure 4.

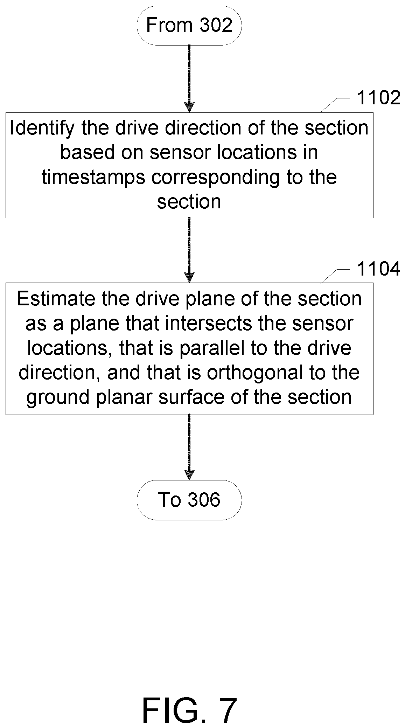

In operation 304, the apparatus 100 may further include means, such as the processor 104 or the like, for estimating a drive plane of the section based on the ground planar surface and a drive direction. In this regard, estimating a drive plane of the section is described in greater detail in conjunction with Figure 7.

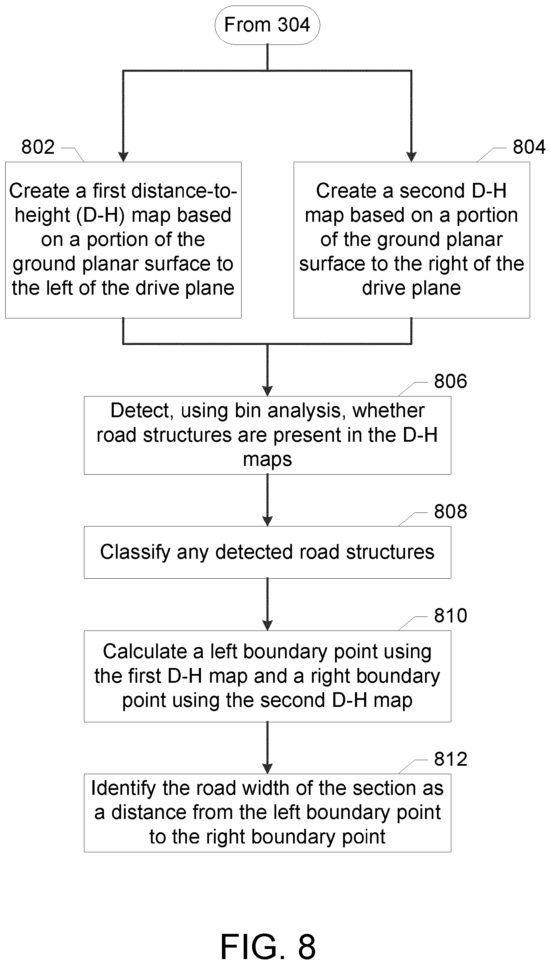

Finally, in operation 306, the apparatus 100 may further include means, such as the processor 104 or the like, for calculating a road width of the section based on the ground planar surface and the drive plane. In this regard, calculating the road width of the section is described in greater detail in conjunction with Figure 8. As shown in Figure 3, operations 302, 304, and 306 may repeat for each section of the point cloud.

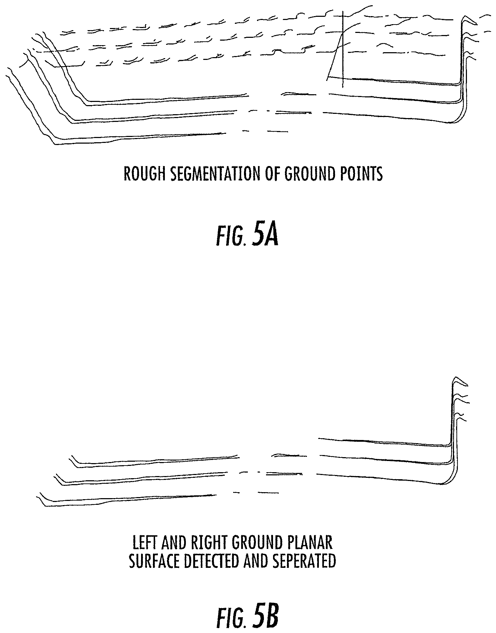

Turning now to Figure 4, a flowchart is shown that describes example embodiments for identifying a ground planar surface of a section. In operation 402, the apparatus 100 may further include means, such as the processor 104, lidar scanning device 108, or the like, for segmenting ground points in the section based on sensor locations and possible road ranges. In this regard, segmentation of a point cloud comprises spatially grouping points with similar properties into homogeneous regions. As applied in this operation, segmenting the ground points identifies planar surfaces, which may be evaluated in connection with potential road ranges to identify a plane most likely to be the road surface. The result of such an analysis may produce a segmentation of ground points such as that shown in Figure 5A.

In operation 404, the apparatus 100 may further include means, such as the processor 104 or the like, for identifying a planar surface of the segmented ground points as the ground planar surface. In one such embodiment, the apparatus 100 may identify the ground planar surface as identified as a planar surface meeting predefined criteria (e.g., it may be the biggest planar surface identified, a planar surface having at least at least a predetermined deviation from the median size of identified planar surfaces, a planar surface meeting certain quality metrics, or the like). In this regard, because the biggest ground planar surface is much more likely to be the road than anything else, this operation comprises a heuristic method of identifying the road surface from the point cloud.

Turning now to Figure 7, a flowchart is shown that describes example embodiments for estimating a drive plane of the section. In operation 702, the apparatus 100 may further include means, such as the processor 104, lidar scanning device 108, or the like, for identifying the drive direction of the section based on sensor locations in timestamps corresponding to the section. In this regard, the "drive direction" of the section is the direction in which the lidar scanning device 108 was travelling during the trip. As noted previously, the lidar data generated from lidar scanning during the trip includes the point cloud, but also includes time stamps of when particular laser pulses were emitted, sensed, and the absolute location of the lidar scanning device 108 at the time that the laser pulses were emitted and sensed. Accordingly, in operation 110, the drive direction of lidar scanning device 108 may be identified upon analysis of the absolute positioning of the sensor at times in which the lidar scanning device 108 is within the portion of the terrain represented by the section of the point cloud.

Subsequently, in operation 704, the apparatus 100 may further include means, such as the processor 104, or the like, for estimating the drive plane of the section as a plane that intersects the sensor locations, that is parallel to the drive direction, and that is orthogonal to the ground planar surface of the section. In some embodiments, the drive plane need not be completely parallel to the drive direction. In any event, the drive plane can be imagined as a divider between first and second portions of the road surface. In one embodiment, the first and second portions of the road surface may be left and the right portions of the road surface, respectively. Accordingly, subsequent description of left and right portions of the road surface throughout this application are examples not meant to limit the manner with which the road surface may be divided. Accordingly, based on the ground planar surface and a drive direction of a section, the apparatus 100 is able to estimate a drive plane of the section.

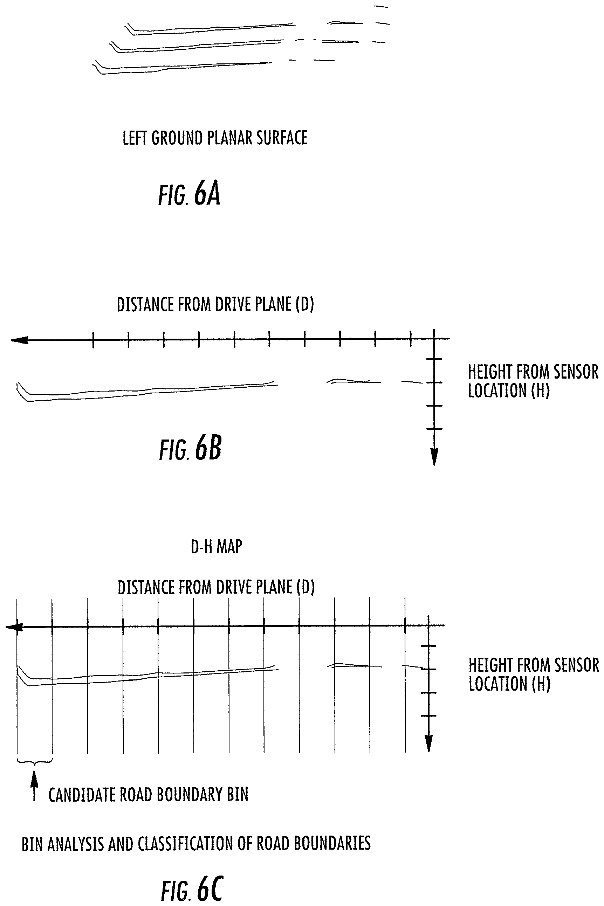

Turning now to Figure 8, a flowchart is shown that describes example embodiments for calculating the road width of the section. In operation 802, the apparatus 100 may include means, such as the processor 104 or the like, for creating a first distance-to-height (D-H) map based on a portion of the ground planar surface to the left of the drive plane. Similarly, in operation 804, which may occur in parallel with operation 802, the apparatus 100 may include means, such as the processor 104 or the like, for creating a second D-H map based on a portion of the ground planar surface to the right of the drive plane. In this regard, as shown in Figure 5B, the apparatus 100 may include means, such as the processor 104 or the like, for dividing the ground planar surface into first and second ground planar surfaces. In one such example, the ground planar surface may be divided into left and right ground planar surfaces, corresponding to the portions of the ground planar surface to the left and to the right of the drive plane, respectively. An example left ground planar surface is shown in Figure 6A. The means for creating the D-H maps may further divide the left (or right) ground planar surface into "bins," where each bin comprises a slice of the left (or right) ground planar surface. The height of a point in the left (or right) ground planar surface within a given bin can be determined in relation to the height of the corresponding sensor location using the axis shown in Figure 6B. Similarly, the distance of a point within the bin is determined in relation to the location of the drive plane. Points falling within the same bin may be stacked together in the D-H map. An example of the bins of a D-H map can be seen in Figure 6C. In this regard, the specific width of each bin may be selected arbitrarily, and will affect the processing power necessary to calculate the road width calculation, but also the degree of accuracy of the road width evaluation (the narrower each bin is, the more complex the road width calculation, due simply to the increased number of bins that will be created, but the more accurate the resulting road width calculations will be). Once the D-H maps are created in operations 802 and 804, apparatus 100 may perform operations 806, 808, and 810 on both D-H maps.

In operation 806, the apparatus 100 may further include means, such as the processor 104 or the like, for detecting, using bin analysis, whether road structures are present in the D-H maps. In this regard, the bin analysis evaluates the contents of any individual bin to detect the road structure. In this regard, based on the points falling within any given bin, the apparatus 100 is able to determine whether the bin represents a continuation of the road surface or a road structure.

In operation 808, the apparatus 100 may further include means, such as the processor 104 or the like, for classifying any detected road structures. In this regard, road structures may be classified as curbs or medians, which may indicate the location of a road boundary, a vehicle or similar transient object that does not indicate the location of a road boundary, or a drop in height that may also indicate a road boundary. In this regard, the apparatus 100 may further include means, such as the processor 104 or the like, for filtering out vehicles or other objects that are not related to road geometry and accordingly are not intended to indicate road boundaries. To distinguish between road structures that may indicate the location of a road boundary and road structures that do not, the apparatus 100 may include means, such as the processor 104 or the like, for comparing the features of points in a few adjacent bins.

This feature point comparison may include comparing the change in average (or median) height of points between adjacent bins. For example, a height change that is less than 20cm may indicate a raise curb, while a height change greater than 20cm but less than 100cm may indicate a raised median. In contrast, moving or parked cars often demonstrate a height change greater than 100cm. Note that these numbers may be based on regulations or standards for road construction from different countries, states or even cities, and the specific numbers are accordingly examples only. The values may be adjusted in embodiments ofthe present invention based on regional differences.

Additionally or alternatively, the comparison may include an evaluation ofthe shape of points in adjacent bins. For raised curbs or medians, there will be a sharper change in elevation between adjacent bins (or within a bin, if the bin width is large), while for cars (moving or parked), and other transient object, the shape change in elevation is usually smoother.

Additionally or alternatively, the comparison may include an evaluation of the density of points and the continuity of density within a bin. For raised curbs or medians, because the entire structure is usually made of the same material, the points will be distributed continuously from the ground plane to the highest points on the structure. In contrast, for moving or parked cars, there will be a discontinuity in point density due to the fact that the lower part of car (usually the wheels) and the upper part of car (usually a metal surface) have different lidar reflectance rate, which will produce a different density of points. Accordingly, a uniform point density provides an indication of a road structure, while a non-uniform point density suggests a vehicle.

Additionally or alternatively, rule-based and machine learning-based methods are utilized to learn the structural differences between curbs, raised medians and other objects on the road (cars, trucks, or the like) and finalize the decision of declaring whether a bin comprises a road boundary bin.

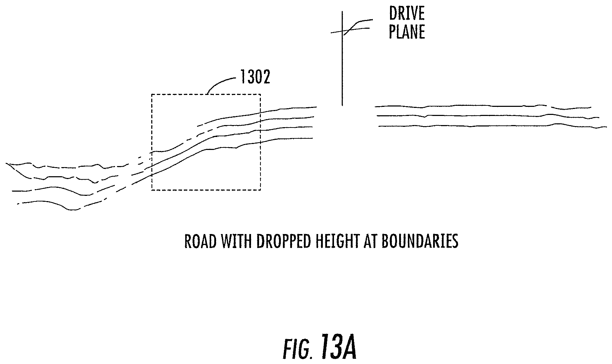

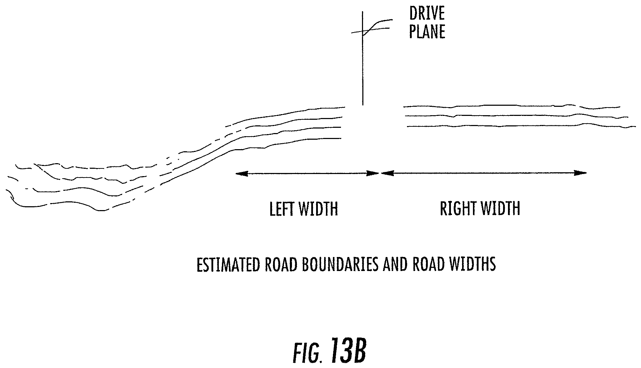

In operation 810, the apparatus 100 may further include means, such as the processor 104 or the like, for calculating a left boundary point using the first D-H map and a right boundary point using the second D-H map. The calculation of these boundary points is described in connection with Figure 13 below.

Finally, in operation 812, the apparatus 100 may further include means, such as the processor 104 or the like, for identifying the road width of the section as a distance from the left boundary point to the right boundary point. Accordingly, based on the ground planar surface and a drive plane of a section of the point cloud, the apparatus 100 is able to estimate a road width of the section.

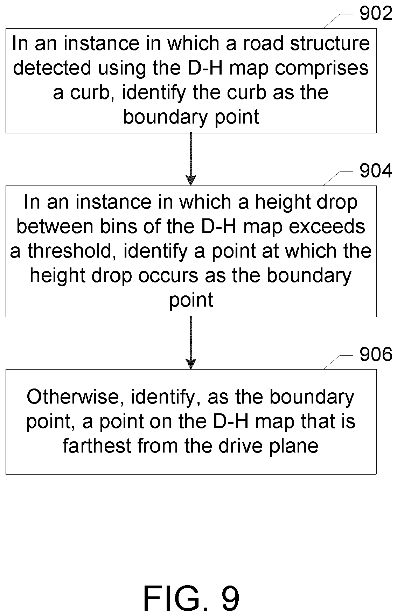

Turning now to Figure 9, a flowchart is shown that describes example embodiments for calculating a boundary point using a D-H map. In operation 902, the apparatus 100 may include means, such as the processor 104 or the like, for, in an instance in which a road structure detected using the D-H map comprises a curb or a median, identifying the curb or median as the boundary point.

In operation 904, the apparatus 100 may include means, such as the processor 104 or the like, for, in an instance in which a height drop between bins of the D-H map exceeds a threshold, identifying a point at which the height drop occurs as the boundary point. The threshold may be selected by a user or automatically determined. In one example embodiment, the threshold may be a value that is most often associated with the size of drop from the edge of a road surface to surrounding terrain.

In operation 906, the apparatus 100 may include means, such as the processor 104 or the like, for, in an instance in which no road structures or sufficiently large height drops are detected, identifying, as the boundary point, the point on the D-H map that is farthest from the drive plane. Accordingly, for any given D-H map, it is possible to determine an accurate boundary point that can subsequently be used in a calculation of a road width.

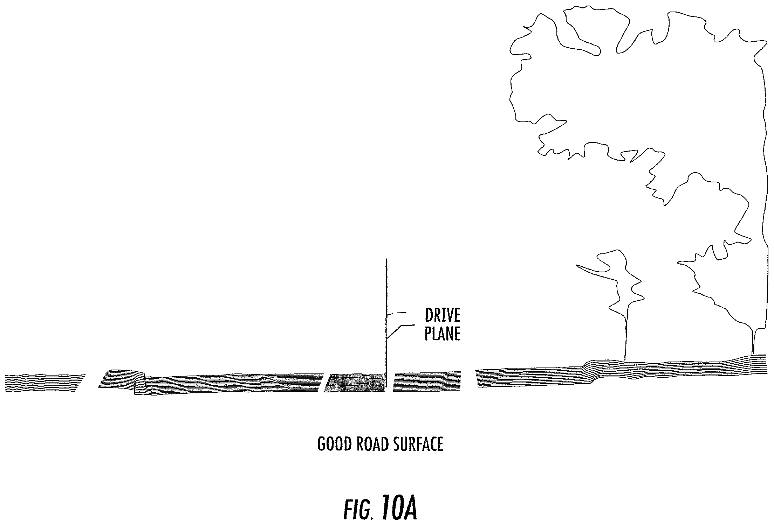

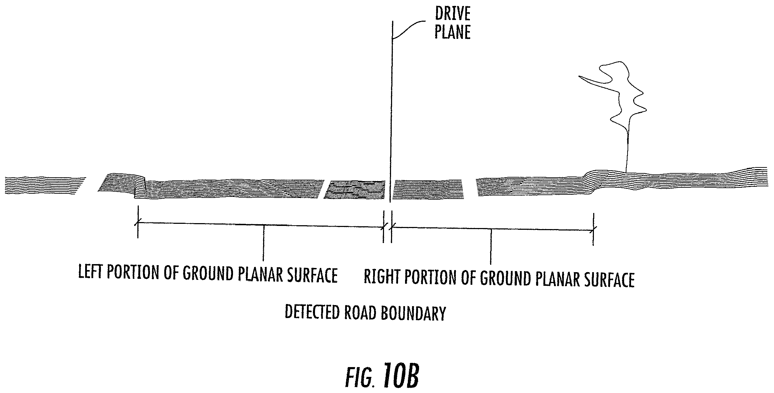

Turning now to Figures 10A through 13B, road width estimations are illustrated visually that may be performed using embodiments of the present invention. Figures 10A and 10B illustrate the process of detection of road boundaries and road width estimation on a good road surface. As can be seen in Figure 10A, a ground planar surface may be identified easily, because there appears to a flat surface through the entirety of the road surface. A drive plane is further identified that is near the center of the image. Turning now to Figure 10B, the left and right portions of the ground planar surface are determined based on the location of the drive plane. Subsequently, D-H maps are created for each of the left and right portions, and bin analysis of the D-H maps reveals curb on both sides of the road. Accordingly, the left width and right width are determined, and add together to comprise the estimated road width.

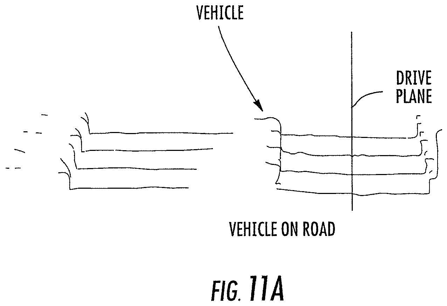

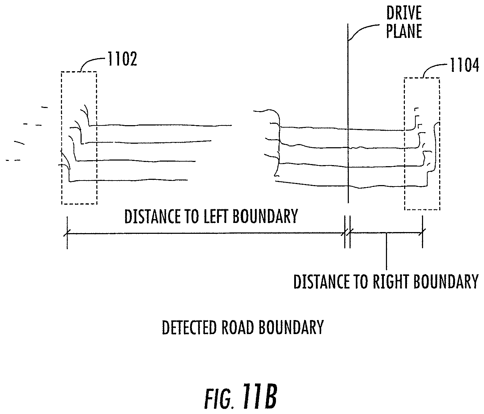

Turning now to Figures 11A and 11B, a situation is identified in which a vehicle is present on the road during the lidar scanning. Differently from the situation illustrated in Figures 10A and 10B, the bin analysis of the left ground planar surface shown in Figure 11A indicates the existence of a feature that can be identified as a vehicle and filtered out. Accordingly, the boundaries to the left (1102) and right (1104) are identified, and the distances from the drive plane thereto are added together to determine the estimated road width.

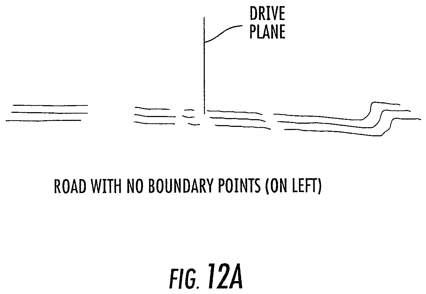

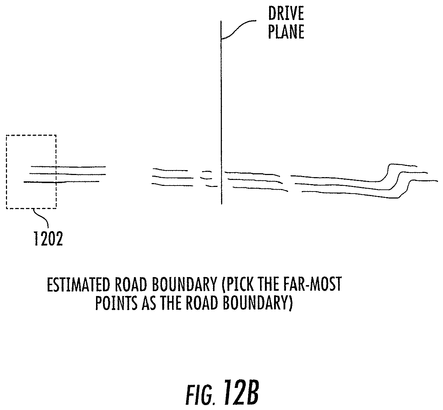

In the situation shown in Figure 12A and 12B, the road under analysis does not have a curb on the left. Accordingly, after bin analysis of the D-H map, no objects are discovered, and the left width of the road is determined to be the farthest-away point (1202) in the left boundary planar surface.

Finally, as shown in Figures 13A and 13B, the road not only does not have a curb to the left, but slopes downhill away from the road, as shown in Figure 13A as element 1302. In this case, although bin analysis does not reveal an object, it does reveal the height drop between bins, as shown in Figure 13B. Accordingly, the left boundary can be identified using this height drop, and the width of the road is calculated.

As described above, certain example embodiments of the present invention provide comprehensive road width estimation based on vehicle lidar sensor locations, vehicle driving orientations, as well as the recognition and classification of road structures. Moreover, the road width estimation may be generated irrespective of the presence of curbs or occlusions on the road surface. By their reliance on lidar data, the road width estimation results are not affected by weather conditions or lighting. Moreover, embodiments of the present invention can detect road structures, such as curbs, raised medians, vehicles (moving or parked), and classify them based on extracted features and rules. In addition, embodiments of the present invention can estimate road widths even in cases where there are occlusions, such as by using the above-described smoothing algorithm, or where there is no curb on side of road (for example, road that has a slope downhill on boundary). Similarly, embodiments of the present invention can distinguish road curbs and/or raised medians from parked vehicles and other objects. As a result, embodiments of the present invention provide an automated, low-cost, accurate, and fast method for determining road widths based on lidar data.

As described above, Figures 2-4 and 7-9 illustrate flowcharts of the operation of an apparatus, method, and computer program product according to example embodiments of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory 108 of an apparatus employing an embodiment of the present invention and executed by a processor 104 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the functions specified in the flowchart blocks. The computer program instructions may also be loaded onto a computer or other programmable apparatus to cause a series of operations to be performed on the computer or other programmable apparatus to produce a computer-implemented process such that the instructions executed on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks ofthe flowcharts, and combinations ofblocks in the flowcharts, can be implemented by special purpose hardware-based computer systems which preform the specified functions, or combinations of special purpose hardware and computer instructions.

## Claims

1. A method comprising:
accessing a point cloud representing terrain, the point cloud generated from a lidar scanning device travelling during a trip;
dividing the point cloud into sections representing portions of the terrain; and
calculating, by a processor, a road width of each of the sections, wherein calculating the road width of each section includes:
segmenting points in the section and identifying as a ground planar surface of the section a planar surface of the segmented points in the section which meets predefined criteria;
estimating a drive plane of the section based on the ground planar surface and a drive direction of the section in which the lidar scanning device was travelling during the trip, wherein the drive plane is parallel to the drive direction and orthogonal to the ground planar surface; and
calculating a road width of the section based on the ground planar surface and the drive plane.

2. The method of Claim 1, wherein identifying the ground planar surface of the section includes:
segmenting ground points in the section based on locations of the lidar scanning device at times that laser pulses were emitted and sensed and possible road ranges where ground points are grouped points with similar properties; and
identifying a biggest planar surface of the segmented ground points as the ground planar surface.

3. The method of any of Claims 1 or 2, wherein estimating the drive plane of the section includes:
identifying the drive direction of the section based on locations of the lidar scanning device at times that laser pulses were emitted and sensed in timestamps corresponding to the section; and
estimating the drive plane of the section as a plane that intersects the locations of the lidar scanning device at times that the laser pulses were emitted and sensed, that is parallel to the drive direction, and that is orthogonal to the ground planar surface of the section.

4. The method of any of Claims 1 to 3, wherein calculating the road width of the section includes:
creating a first distance-to-height(D-H) map based on a portion of the ground planar surface to the left of the drive plane;
creating a second D-H map based on a portion of the ground planar surface to the right of the drive plane;
detecting, using bin analysis, whether road structures are present in the D-H maps;
classifying any detected road structures;
calculating a left boundary point using the first D-H map and a right boundary point using the second D-H map; and
identifying the road width of the section as a distance from the left boundary point to the right boundary point.

5. The method of Claim 4, wherein calculating a boundary point using a D-H map includes:
in an instance in which a road structure detected using the D-H map comprises a curb, identifying the curb as the boundary point;
in an instance in which a height drop between bins of the D-H map exceeds a threshold, identifying a point at which the height drop occurs as the boundary point; and
in an instance in which no road structures or height drops are detected, identifying, as the boundary point, a point on the D-H map that is farthest from the drive plane.

6. The method of any of claims 1 to 5, further comprising applying a smoothing algorithm to adjust the calculated road width of at least one section.

7. A computer program product comprising at least one computer-readable storage medium having computer-executable program code portions stored therein, the computer- executable program code portions comprising program code instructions that, when executed, cause an apparatus to perform the method of any of Claims 1 through 6.

8. An apparatus comprising at least one processor and at least one memory including computer program code, the at least one memory and the computer program code configured to, with the at least one processor, cause the apparatus to:
access a point cloud representing terrain, the point cloud generated from a lidar scanning device travelling during a trip;
divide the point cloud into sections representing portions of the terrain; and
calculate a road width of each of the sections, wherein the program code instructions to calculate a road width comprise program code instructions to:
segment points in the section and identify as a ground planar surface of the section a planar surface of the segmented points in the section which meets predefined criteria;
estimate a drive plane of the section based on the ground planar surface and a drive direction of the section in which the lidar scanning device was travelling during the trip, wherein the drive plane is parallel to the drive direction and orthogonal to the ground planar surface; and
calculate the road width of the section based on the ground planar surface and the drive plane.

9. The apparatus of Claim 8, wherein the at least one memory and the computer program code are configured to, with the at least one processor, cause the apparatus to identify the ground planar surface of the section by:
segmenting ground points in the section based on locations of the lidar scanning device at times that laser pulses were emitted and sensed and possible road ranges where ground points are grouped points with similar properties; and
identifying a biggest planar surface of the segmented ground points as the ground planar surface.

10. The apparatus of any of Claims 8 or 9, wherein the at least one memory and the computer program code are configured to, with the at least one processor, cause the apparatus to estimate the drive plane of the section by:
identifying the drive direction of the section based on locations of the lidar scanning device at times that laser pulses were emitted and sensed in timestamps corresponding to the section; and
estimating the drive plane of the section as a plane that intersects the locations of the lidar scanning device at times that the laser pulses were emitted and sensed, that is parallel to the drive direction, and that is orthogonal to the ground planar surface of the section.

11. The apparatus of any of Claims 8 to 10, wherein the at least one memory and the computer program code are configured to, with the at least one processor, cause the apparatus to calculate the road width of the section by:
creating a first D-H map based on a portion of the ground planar surface to the left of the drive plane;
creating a second D-H map based on a portion of the ground planar surface to the right of the drive plane;
detecting, using bin analysis, whether road structures are present in the D-H maps;
classifying any detected road structures;
calculating a left boundary point using the first D-H map and a right boundary point using the second D-H map; and
identifying the road width of the section as a distance from the left boundary point to the right boundary point.

12. The apparatus of Claim 11, wherein calculating a boundary point using a D-H map includes:
in an instance in which a road structure detected using the D-H map comprises a curb, identifying the curb as the boundary point;
in an instance in which a height drop between bins of the D-H map exceeds a threshold, identifying a point at which the height drop occurs as the boundary point; and
in an instance in which no road structures or height drops are detected, identifying, as the boundary point, a point on the D-H map that is farthest from the drive plane.

13. The apparatus of any of Claims 8 to 12, wherein the at least one memory and the computer program code are further configured to, with the at least one processor, cause the apparatus to apply a smoothing algorithm to adjust the calculated road width of at least one section.

## Patentansprüche

1. Verfahren, umfassend:
Zugreifen auf eine Punktwolke, die ein Gelände darstellt, wobei die Punktwolke von einer Lidarabtastvorrichtung, bewegend während einer Fahrt, erzeugt wird;
Unterteilen der Punktwolke in Abschnitte, die Teile des Geländes darstellen; und
Berechnen einer Straßenbreite jedes der Abschnitte durch einen Prozessor, wobei das Berechnen der Straßenbreite jedes Abschnitts Folgendes beinhaltet:
Segmentieren von Punkten in dem Abschnitt und Identifizieren einer ebenen Oberfläche der segmentierten Punkte in dem Abschnitt, die vordefinierte Kriterien erfüllt, als ebene Bodenfläche des Abschnitts;
Schätzen einer Fahrtebene des Abschnitts basierend auf der ebenen Bodenflächeund einer Fahrtrichtung des Abschnitts, in der sich die Lidarabtastvorrichtung während der Fahrt bewegt hat, wobei die Fahrtebene parallel zur Fahrtrichtung und orthogonal zur ebenen Bodenfläche ist; und
Berechnen einer Straßenbreite des Abschnitts basierend auf der ebenen Bodenfläche und der Fahrtebene.

2. Verfahren nach Anspruch 1, wobei das Identifizieren der ebenen Bodenfläche des Abschnitts Folgendes beinhaltet:
Segmentieren von Bodenpunkten in dem Abschnitt basierend auf Positionen der Lidarabtastvorrichtung zu Zeiten, in denen Laserpulse ausgesendet und erfasst wurden, und möglichen Straßenbereichen, wobei Bodenpunkte gruppierte Punkte mit ähnlichen Eigenschaften sind; und
Identifizieren einer größten ebenen Fläche der segmentierten Bodenpunkte als die ebene Bodenfläche.

3. Verfahren nach einem der Ansprüche 1 oder 2, wobei das Schätzen der Fahrtebene des Abschnitts Folgendes beinhaltet:
Identifizieren der Fahrtrichtung des Abschnitts basierend auf den Positionen der Lidarabtastvorrichtung zu Zeiten, in denen Laserpulse ausgesendet und in Zeitstempeln erfasst wurden, die dem Abschnitt entsprechen; und
Schätzen der Fahrtebene des Abschnitts als eine Ebene, die die Positionen der Lidarabtastvorrichtung zu Zeiten schneidet, in denen die Laserpulse ausgesendet und erfasst wurden, die parallel zur Fahrtrichtung und orthogonal zur ebenen Bodenfläche des Abschnitts ist.

4. Verfahren nach einem der Ansprüche 1 bis 3, wobei das Berechnen der Straßenbreite des Abschnitts Folgendes beinhaltet:
Erzeugen einer ersten Abstand-zu-Höhe(D-H) Karte basierend auf einem Abschnitt der ebenen Bodenfläche links von der Fahrtebene;
Erzeugen einer zweiten D-H-Karte basierend auf einem Abschnitt der ebenen Bodenfläche rechts von der Fahrtebene;
Erkennen mittels Bin-Analyse, ob Straßenstrukturen in den D-H-Karten vorhanden sind;
Klassifizieren von erkannten Straßenstrukturen;
Berechnen eines linken Begrenzungspunktes unter Verwendung der ersten D-H-Karte und eines rechten Begrenzungspunktes unter Verwendung der zweiten D-H-Karte; und
Identifizieren der Straßenbreite des Abschnitts als Abstand vom linken Begrenzungspunkt zum rechten Begrenzungspunkt.

5. Verfahren nach Anspruch 4, wobei das Berechnen eines Begrenzungspunktes unter Verwendung einer D-H-Karte Folgendes beinhaltet:
in einem Fall, in dem eine Straßenstruktur, die unter Verwendung der D-H-Karte erkannt wurde, einen Bordstein umfasst, Identifizieren des Bordsteins als Begrenzungspunkt;
in einem Fall, in dem ein Höhenabfall zwischen den Bins der D-H-Karte einen Schwellenwert überschreitet, Identifizieren eines Punkt, an dem der Höhenabfall auftritt, als Begrenzungspunkt; und
in einem Fall, in dem keine Straßenstrukturen oder Höhenabfälle erkannt werden, Identifizieren eines Punktes auf der D-H-Karte, der am weitesten von der Fahrtebene entfernt ist, als Begrenzungspunkt.

6. Verfahren nach einem der Ansprüche 1 bis 5, ferner umfassend das Anwenden eines Glättungsalgorithmus zum Anpassen der berechneten Straßenbreite von mindestens einem Abschnitt.

7. Computerprogrammprodukt, umfassend mindestens ein computerlesbares Speichermedium mit darin gespeicherten computerausführbaren Programmcodeabschnitten, wobei die computerausführbaren Programmcodeabschnitte Programmcodeanweisungen umfassen, die, wenn sie ausgeführt werden, eine Vorrichtung veranlassen, das Verfahren nach einem der Ansprüche 1 bis 6 auszuführen.

8. Vorrichtung, umfassend mindestens einen Prozessor und mindestens einen Speicher, der Computerprogrammcode beinhaltet, wobei der mindestens eine Speicher und der Computerprogrammcode konfiguriert sind, um mit dem mindestens einen Prozessor die Vorrichtung dazu zu veranlassen:
auf eine Punktwolke, die einGelände darstellt, zuzugreifen, wobei die Punktwolke von einer Lidarabtastvorrichtung, bewegend während einer Fahrt, erzeugt wird;
die Punktwolke in Abschnitte, die Teile des Geländes darstellen, zu unterteilen; und
eine Straßenbreite für jeden der Abschnitte zu berechnen, wobei die Programmcodeanweisungen zum Berechnen einer Straßenbreite Programmcodeanweisungen umfassen, um:
Punkte in dem Abschnitt zu segmentieren und eine ebene Oberfläche der segmentierten Punkte in dem Abschnitt, die vordefinierte Kriterien erfüllt, als ebene Bodenfläche des Abschnitts zu identifizieren;
eine Fahrtebene des Abschnitts basierend auf der ebenen Bodenfläche und einer Fahrtrichtung des Abschnitts, in dem sich die Lidarabtastvorrichtung während der Fahrt bewegt hat, zu schätzen, wobei die Fahrtebene parallel zur Antriebsrichtung und orthogonal zur ebenen Bodenfläche ist; und
die Straßenbreite des Abschnitts basierend auf der ebenen Bodenfläche und der Fahrtebene zu berechnen.

9. Vorrichtung nach Anspruch 8, wobei der mindestens eine Speicher und der Computerprogrammcode konfiguriert sind, um mit dem mindestens einen Prozessor zu bewirken, dass die Vorrichtung die ebene Bodenfläche des Abschnitts identifiziert durch:
Segmentieren von Bodenpunkten in dem Abschnitt basierend auf Positionen der Lidarabtastvorrichtung zu Zeiten, in denen Laserpulse ausgesendet und erfasst wurden, und möglichen Straßenbereichen, wobei Bodenpunkte gruppierte Punkte mit ähnlichen Eigenschaften sind; und
Identifizieren einer größten ebenen Fläche der segmentierten Bodenpunkte als die ebene Bodenfläche.

10. Vorrichtung nach einem der Ansprüche 8 oder 9, wobei der mindestens eine Speicher und der Computerprogrammcode konfiguriert sind, um mit dem mindestens einen Prozessor zu bewirken, dass die Vorrichtung die Fahrtebene des Abschnitts schätzt durch:
Identifizieren der Fahrtrichtung des Abschnitts basierend auf den Positionen der Lidarabtastvorrichtung zu Zeiten, in denen Laserpulse ausgesendet und in Zeitstempeln erfasst wurden, die dem Abschnitt entsprechen; und
Schätzen der Fahrtebene des Abschnitts als eine Ebene, die die Positionen der Lidarabtastvorrichtung zu Zeiten schneidet, in denen die Laserpulse ausgesendet und erfasst wurden, die parallel zur Fahrtrichtung und orthogonal zur ebenen Bodenfläche des Abschnitts ist.

11. Vorrichtung nach einem der Ansprüche 8 bis 10, wobei der mindestens eine Speicher und der Computerprogrammcode konfiguriert sind, um mit dem mindestens einen Prozessor zu bewirken, dass die Vorrichtung die Straßenbreite des Abschnitts berechnet durch:
Erzeugen einer ersten D-H-Karte basierend auf einem Abschnitt der ebenen Bodenfläche links von der Fahrtebene;
Erzeugen einer zweiten D-H-Karte basierend auf einem Abschnitt der ebenen Bodenfläche rechts von der Fahrtebene;
Erkennen mittels Bin-Analyse, ob Straßenstrukturen in den D-H-Karten vorhanden sind;
Klassifizieren von erkannten Straßenstrukturen;
Berechnen eines linken Begrenzungspunktes unter Verwendung der ersten D-H-Karte und eines rechten Begrenzungspunktes unter Verwendung der zweiten D-H-Karte; und
Identifizieren der Straßenbreite des Abschnitts als Abstand vom linken Begrenzungspunkt zum rechten Begrenzungspunkt.

12. Die Vorrichtung nach Anspruch 11, wobei das Berechnen eines Begrenzungspunktes unter Verwendung einer D-H-Karte Folgendes beinhaltet:
in einem Fall, in dem eine Straßenstruktur, die unter Verwendung der D-H-Karte erkannt wurde, einen Bordstein umfasst, Identifizieren des Bordsteins als Begrenzungspunkt;
in einem Fall, in dem ein Höhenabfall zwischen den Bins der D-H-Karte einen Schwellenwert überschreitet, Identifizieren eines Punkts, an dem der Höhenabfall auftritt, als Begrenzungspunkt; und
in einem Fall, in dem keine Straßenstrukturen oder Höhenabfälle erkannt werden, Identifizieren eines Punktes auf der D-H-Karte, der am weitesten von der Fahrtebene entfernt ist, als Begrenzungspunkt.

13. Vorrichtung nach einem der Ansprüche 8 bis 12, wobei der mindestens eine Speicher und der Computerprogrammcode ferner konfiguriert sind, um mit dem mindestens einen Prozessor zu bewirken, dass die Vorrichtung einen Glättungsalgorithmus anwendet, um die berechnete Straßenbreite von mindestens einem Abschnitt anzupassen.

## Revendications

1. Procédé consistant :
à accéder à un nuage de points représentant un terrain, le nuage de points étant généré à partir d'un dispositif de balayage par lidar, ledit dispositif de balayage se déplaçant pendant un parcours ;
à diviser le nuage de points en sections représentant des parties du terrain ; et
à calculer, par un processeur, une largeur de route de chacune des sections, procédé dans lequel le calcul de la largeur de route de chaque section comporte :
des points de segmentation dans la section et une identification de surface, comme étant une surface plane du sol de la section et qui est celles d'une surface plane des points segmentés dans la section, surface plane qui répond à des critères prédéfinis ;
une estimation d'un plan de trajet de la section, estimation basée sur la surface plane du sol, et une estimation d'une direction de trajet de la section, direction suivant laquelle le dispositif de balayage par lidar a été déplacé pendant le parcours, où le plan de trajet est parallèle à la direction de trajet et orthogonal par rapport à la surface plane du sol ; et
un calcul d'une largeur de route de la section, calcul basé sur la surface plane du sol et sur le plan de trajet.

2. Procédé selon la revendication 1, dans lequel l'identification de la surface plane du sol de la section comporte :
une segmentation de points du sol situés dans la section, en se basant sur des emplacements du dispositif de balayage par lidar, à des moments où des impulsions laser ont été émises et détectées, et en se basant sur des distances de routes possibles, où des points du sol sont des points groupés ayant des propriétés similaires ; et
une identification d'une surface plane - la plus grande - des points du sol segmentés, comme étant la surface plane du sol.

3. Procédé selon l'une des revendications 1 ou 2, dans lequel l'estimation du plan de trajet de la section comporte :
une identification de la direction de trajet de la section, identification basée sur des emplacements du dispositif de balayage par lidar, à des moments où des impulsions laser ont été émises et détectées dans des horodatages correspondant à la section ; et
une estimation du plan de trajet de la section, comme étant un plan qui coupe les emplacements du dispositif de balayage par lidar, à des moments où les impulsions laser ont été émises et détectées, plan qui est parallèle à la direction de trajet et qui est orthogonal par rapport à la surface plane du sol de la section.

4. Procédé selon l'une quelconque des revendications 1 à 3, dans lequel le calcul de la largeur de la route de la section comporte :
la création d'une première carte de distance par rapport à la hauteur (D-H), basée sur une partie de la surface plane du sol jusqu'à la gauche du plan de trajet ;
la création d'une deuxième carte D-H basée sur une partie de la surface plane du sol jusqu'à la droite du plan de trajet ;
la détection, en utilisant une analyse de segments, pour savoir si des structures de routes sont présentes dans les cartes D-H ;
la classification de n'importe quelle structure de route détectée ;
le calcul d'un point limite gauche en utilisant la première carte D-H, et le calcul d'un point limite droit en utilisant la deuxième carte D-H ; et
l'identification de la largeur de route de la section comme étant une distance à partir du point limite gauche jusqu'au point limite droit.

5. Procédé selon la revendication 4, dans lequel le calcul d'un point limite en utilisant une carte D-H, où :
dans un cas, dans lequel une structure de route détectée en utilisant la carte D-H comprend une bordure, ledit calcul comporte une identification de la bordure comme étant le point limite ;
dans un cas, dans lequel une diminution de hauteur entre des segments de la carte D-H dépasse un seuil, ledit calcul comporte une identification d'un point, au niveau duquel se produit la diminution de hauteur, comme étant le point limite ; et
dans un cas, dans lequel aucune structure de route ni aucune diminution de hauteur n'a été détectée, ledit calcul comporte une identification d'un point, comme étant le point limite, ledit point situé sur la carte D-H étant celui qui est le plus loin du plan de trajet.

6. Procédé selon l'une quelconque des revendications 1 à 5, consistant en outre à appliquer un algorithme de lissage, pour ajuster la largeur de route calculée d'au moins une section.

7. Produit programme d'ordinateur comprenant au moins un support d'information pouvant être lu par un ordinateur, ledit produit programme ayant des parties de code de programme pouvant être exécutées par l'ordinateur et stockées en mémoire dans ledit support d'information, les parties de code de programme pouvant être exécutées par l'ordinateur comprenant des instructions de code de programme qui, quand elles sont exécutées, ont pour effet qu'un appareil met en oeuvre le procédé selon l'une quelconque des revendications 1 à 6.

8. Appareil comprenant au moins un processeur et au moins une mémoire comportant un code de programme informatique, la mémoire au moins au nombre de un et le code de programme informatique étant configurés, avec le processeur au moins au nombre de un, pour faire en sorte que l'appareil permette :
d'accéder à un nuage de points représentant un terrain, le nuage de points étant généré à partir d'un dispositif de balayage par lidar se déplaçant pendant un parcours ;
de diviser le nuage de points en sections représentant des parties du terrain ; et
de calculer une largeur de route de chacune des sections, où les instructions de code de programme servant à calculer une largeur de route comprennent des instructions de code de programme, pour :
segmenter des points dans la section et pour identifier, comme étant une surface plane du sol de la section, une surface plane des points segmentés dans la section, surface plane qui répond à des critères prédéfinis ;
estimer un plan de trajet de la section, estimation basée sur la surface plane du sol, et pour estimer une direction de trajet de la section, direction suivant laquelle le dispositif de balayage par lidar a été déplacé pendant le parcours, où le plan de trajet est parallèle à la direction de trajet et orthogonal par rapport à la surface plane du sol ; et
calculer la largeur de route de la section, calcul basé sur la surface plane du sol et sur le plan de trajet.

9. Appareil selon la revendication 8, dans lequel la mémoire au moins au nombre de un et le code de programme informatique sont configurés, avec le processeur au moins au nombre de un, pour faire en sorte que l'appareil identifie la surface plane du sol de la section, par :
une segmentation de points du sol situés dans la section, en se basant sur des emplacements du dispositif de balayage par lidar, à des moments où des impulsions laser ont été émises et détectées, et en se basant sur des distances de routes possibles, où des points du sol sont des points groupés ayant des propriétés similaires ; et
une identification d'une surface plane - la plus grande - des points du sol segmentés, comme étant la surface plane du sol.

10. Appareil selon l'une des revendications 8 ou 9, dans lequel la mémoire au moins au nombre de un et le code de programme informatique sont configurés, avec le processeur au moins au nombre de un, pour faire en sorte que l'appareil estime le plan de trajet de la section, par :
une identification de la direction de trajet de la section, identification basée sur des emplacements du dispositif de balayage par lidar, à des moments où des impulsions laser ont été émises et détectées dans des horodatages correspondant à la section ; et
une estimation du plan de trajet de la section, comme étant un plan qui coupe les emplacements du dispositif de balayage par lidar, à des moments où les impulsions laser ont été émises et détectées, plan qui est parallèle à la direction de trajet et qui est orthogonal par rapport à la surface plane du sol de la section.

11. Appareil selon l'une quelconque des revendications 8 à 10, dans lequel la mémoire au moins au nombre de un et le code de programme informatique sont configurés, avec le processeur au moins au nombre de un, pour faire en sorte que l'appareil calcule la largeur de route de la section, par :
la création d'une première carte D-H basée sur une partie de la surface plane du sol jusqu'à la gauche du plan de trajet ;
la création d'une deuxième carte D-H basée sur une partie de la surface plane du sol jusqu'à la droite du plan de trajet ;
la détection, en utilisant une analyse de segments, pour savoir si des structures de routes sont présentes dans les cartes D-H ;
la classification de n'importe quelle structure de route détectée ;
le calcul d'un point limite gauche en utilisant la première carte D-H, et le calcul d'un point limite droit en utilisant la deuxième carte D-H ; et
l'identification de la largeur de route de la section, comme étant une distance à partir du point limite gauche jusqu'au point limite droit.

12. Appareil selon la revendication 11, dans lequel le calcul d'un point limite en utilisant une carte D-H, où :
dans un cas, dans lequel une structure de route détectée en utilisant la carte D-H comprend une bordure, ledit calcul comporte une identification de la bordure comme étant le point limite ;
dans un cas, dans lequel une diminution de hauteur entre des segments de la carte D-H dépasse un seuil, ledit calcul comporte une identification d'un point, au niveau duquel se produit la diminution de hauteur, comme étant le point limite ; et
dans un cas, dans lequel aucune structure de route ni aucune diminution de hauteur n'a été détectée, ledit calcul comporte une identification d'un point, comme étant le point limite, ledit point situé sur la carte D-H étant celui qui est le plus loin du plan de trajet.

13. Procédé selon l'une quelconque des revendications 8 à 12, dans lequel la mémoire au moins au nombre de un et le code de programme informatique sont configurés en outre, avec le processeur au moins au nombre de un, pour faire en sorte que l'appareil applique un algorithme de lissage, pour ajuster la largeur de route calculée d'au moins une section.
